# EUROPÄISCHE PATENTSCHRIFT

(11) **EP 4 672 971 B1**
(45) Veröffentlichungstag und Bekanntmachung des Hinweises auf die Patenterteilung: **27.05.2026**
(21) Anmeldenummer: 25714538.3
(22) Anmeldetag: 24.03.2025
(51) Int. Cl.: A23G 3/02, A23G 3/34, A23P 10/25, B30B 11/20, B30B 15/34

(54) **TROPFENFORMER UND VORRICHTUNG MIT EINEM TROPFENFORMER**
DROP FORMER, AND DEVICE COMPRISING A DROP FORMER
MACHINE À GOUTTES ET DISPOSITIF COMPRENANT UNE MACHINE À GOUTTES

(30) Priorität: 22.05.2024 DE 102024114210
(43) Veröffentlichungstag der Anmeldung: 07.01.2026
(73) Patentinhaber: IPCO Germany GmbH, 70736 Fellbach (DE)
(72) Erfinder: HÄFELE, Dietmar, 71554 Weissach im Tal (DE); WILLIAMS, David, 70197 Stuttgart (DE)
(74) Vertreter: Patentanwälte Ruff, Wilhelm, Beier, Dauster & Partner mbB
(86) Internationale Anmeldenummer: PCT/EP2025/058004
(87) Internationale Veröffentlichungsnummer: WO 2025/242343

(56) Entgegenhaltungen:
- EP-B1- 0 244 849
- DE-A1- 10 306 691
- DE-A1- 3 530 508
- DE-C1- 19 846 935

## Beschreibung

Die Erfindung betrifft einen Tropfenformer zum Herstellen von Pastillen aus einem fließfähigen Stoff, mit einer gelochten Außentrommel, die um ihre Längsachse drehbar gelagert ist, mit einem innerhalb der Außentrommel angeordneten Innenkörper, wobei der Innenkörper mit wenigstens einem Zuführkanal für fließfähigen Stoff versehen ist und wobei der Innenkörper im Betrieb des Tropfenformers den fließfähigen Stoff in Richtung auf eine Innenseite der Außentrommel ausgibt. Die Erfindung betrifft auch eine Vorrichtung mit einem erfindungsgemäßen Tropfenformer und einem umlaufenden Band zum Ablegen von Produkttropfen. Gattungsgemäße Tropfenformer sind beispielsweise aus DE 35 30 508 A1, DE 198 46 935 C1, DE 103 06 691 A1 oder EP 0 244 849 B1 bekannt.

Mit der Erfindung sollen ein Tropfenformer und eine Vorrichtung mit einem Tropfenformer hinsichtlich der Verarbeitung von abrasiven und/oder sedimentierenden fließfähigen Stoffen verbessert werden.

Erfindungsgemäß ist hierzu ein Tropfenformer mit den Merkmalen von Anspruch 1 bzw. eine Vorrichtung mit einem Tropfenformer mit den Merkmalen von Anspruch 13 vorgesehen. Vorteilhafte Weiterbildungen der Erfindung sind in den Unteransprüchen genannt.

Bei einem Tropfenformer zum Herstellen von Pastillen aus einem fließfähigen Stoff mit einer gelochten Außentrommel, die um ihre Längsachse drehbar gelagert ist, und mit einem innerhalb der Außentrommel angeordneten Innenkörper, wobei der Innenkörper mit wenigstens einem Zuführkanal für den fließfähigen Stoff versehen ist und wobei der Innenkörper im Betrieb des Tropfenformers an einer Innenseite der Außentrommel anliegt, ist vorgesehen, dass der Innenkörper ausschließlich unter Wirkung der Schwerkraft an der Innenseite der rotierenden Außentrommel anliegt.

Infolgedessen wird der Innenkörper nur durch sein Eigengewicht an die Innenseite der Außentrommel angedrückt. Der Innenkörper kann dadurch leicht ausweichen, wodurch sich ein geringerer Abrieb bei abrasiven, fließfähigen Stoffen, die pastilliert werden sollen, ergibt. Auch wird dadurch eine wesentlich geringere Gefahr des Verstopfens des Tropfenformers erreicht. Denn dann, wenn beispielsweise Feststoffpartikel oder angetrocknete Reste des fließfähigen Stoffs am Innenkörper oder an dem Innenumfang der Außentrommel vorhanden sind, weicht der Innenkörper diesen Feststoffen einfach aus, blockiert nicht und durch die fortlaufende Bewegung kann die Verstopfung wieder aufgelöst werden.

In Weiterbildung der Erfindung weist der Innenkörper einen Stator auf und einen am Stator angeordneten Gleitschuh, wobei wenigstens eine Kontaktfläche des Gleitschuhs, die an einem Innenumfang der Außentrommel anliegt, aus einem weicheren Material als der Innenumfang der Außentrommel gebildet ist.

Der Gleitschuh kann dadurch, dass er aus einem weicheren Material als der Innenumfang der Außentrommel gebildet ist, schneller verschleißen als der Innenumfang der Außentrommel und kann bei zu großem Verschleiß ausgetauscht werden. Die erfindungsgemäße Vorrichtung kann dadurch in besonderer Weise für das kontinuierliche Pastillieren von abrasiven, fließfähigen Stoffen, beispielsweise Schwefel-Feststoff-Mischungen oder andere Flüssig-/Feststoffmischungen. insbesondere Düngemittel, eingesetzt werden. Der Gleitschuh ist beispielsweise in Längsrichtung an einem Stator, der Teil des Innenkörpers bildet, befestigt und beispielsweise mittels einer Schwalbenschwanzverbindung mit dem Innenkörper verbunden. Der Gleitschuh kann dadurch zuverlässig fixiert und dennoch in einfacher Weise ausgetauscht werden.

In Weiterbildung der Erfindung ist der Innenkörper mit wenigstens zwei Heizkanälen versehen.

Die Heizkanäle umgeben im Querschnitt gesehen einen Zuführkanal im Innenkörper abschnittsweise. Mittels solcher Heizkanäle kann eine gleichmäßige und zuverlässige Beheizung des fließfähigen Stoffs innerhalb des Stators erzielt werden, so dass die Gefahr des Verfestigens des fließfähigen Stoffs im Innenkörper und damit eine Verstopfungsgefahr wesentlich reduziert ist.

In Weiterbildung der Erfindung ist an dem Innenkörper eine Verteilleiste vorgesehen, mittels der das fließfähige Medium mehrfach umgelenkt und in Richtung auf den Innenumfang der Außentrommel ausgegeben wird.

Die Verteilleiste ist im Zuführkanal zwischen dem Innenkörper und dem Gleitschuh angeordnet und sorgt für eine gleichmäßige Verteilung des fließfähigen Stoffs über die Länge des Innenkörpers gesehen.

In Weiterbildung der Erfindung ist die Verteilleiste und/oder der Gleitschuh in Längsrichtung der Außentrommel vollständig ausziehbar an dem Innenkörper angeordnet.

Die Verteilleiste und der Gleitschuh können dadurch in sehr einfacher Weise ausgebaut werden, beispielsweise zu Wartungszwecken. Der Gleitschuh kann mittels einer Schwalbenschwanzführung ausziehbar am Innenkörper gehalten sein, die Verteilleiste kann in einer Ausnehmung des Innenkörpers ausziehbar gehalten sein.

In Weiterbildung der Erfindung ist der Innenkörper Teil eines innerhalb der Außentrommel angeordneten Stators, wobei der Stator wenigstens eine Tragstange aufweist und der Innenkörper mittels der wenigstens einen Tragstange innerhalb der Außentrommel in und entgegen der Drehrichtung der Außentrommel gehalten ist.

Die wenigstens eine Tragstange ist an Auflagern an mindestens einer Seite gehalten, wobei die Auflager im Bereich von Lagerplatten oder an den Lagerplatten der Außentrommel gehalten sind, allgemein sind die Tragstangen im Bereich mindestens einer der seitlichen Drehlagerungen der Außentrommel gehalten.

In Weiterbildung der Erfindung ist der Innenkörper in Längsrichtung der Außentrommel vollständig ausziehbar in der Außentrommel angeordnet.

Auf diese Weise kann der Innenkörper aus der Außentrommel entfernt werden. Insbesondere muss die Außentrommel nicht abgebaut werden, sondern der Innenkörper kann in axialer Richtung aus der Außentrommel herausgezogen werden. Der Innenkörper ist vorteilhafterweise an der Tragstange verschiebbar gehalten. Der Innenkörper kann in der Längsrichtung verschiebbar an der Tragstange angeordnet sein.

In Weiterbildung der Erfindung weist der Stator eine Hubvorrichtung auf, die einerseits mit der Tragstange und andererseits mit dem Innenkörper verbunden ist, wobei mittels der Hubvorrichtung der Innenkörper auf dem Innenumfang der Außentrommel abgesenkt und vom Innenumfang der Außentrommel abgehoben werden kann.

Im abgesenkten Zustand schwimmt der Innenkörper im Betrieb des Tropfenformers, also bei sich drehender Außentrommel, auf dem Innenumfang der Außentrommel auf. Im abgesenkten Zustand hat der Innenkörper keine starre Verbindung mehr zur Hubvorrichtung, so dass er ausschließlich aufgrund seines Eigengewichts an den Innenumfang der Außentrommel angedrückt wird. Für den Ausbau des Innenkörpers oder den Ausbau der Außentrommel kann der Innenkörper mittels der Hubvorrichtung angehoben und damit vom Innenumfang der Außentrommel abgehoben werden.

In Weiterbildung der Erfindung bildet die Tragstange Teil eines Haltekäfigs, an dem der Innenkörper gegenüber Bewegungen in und entgegen der Drehrichtung der Außentrommel gehalten ist.

In Weiterbildung der Erfindung weist der Haltekäfig drei parallel zueinander verlaufende Tragstangen auf.

Vorteilhafterweise bilden die Tragstangen dadurch eine Dreieckskonfiguration, wobei eine Tragstange oben und zwei Tragstangen unten angeordnet sind.

In Weiterbildung der Erfindung ist der Stator mit einer Segment-Flächenheizung versehen, wobei die Segment-Flächenheizung innerhalb der Außentrommel angeordnet ist, sich parallel zur Außentrommel erstreckt und im Querschnitt gesehen sich über einen Winkel von mehr als 180° entlang des Innenumfangs der Außentrommel erstreckt.

Idealerweise erstreckt sich die Segment-Flächenheizung auf beiden Seiten bis kurz vor das Gleitstück des Innenkörpers, das auf dem Innenumfang aufliegt. Der Innenumfang der Außentrommel kann dadurch weitgehend und lediglich mit Ausnahme des Bereichs, in dem das Gleitstück auf dem Innenumfang aufliegt, beheizt werden.

In Weiterbildung der Erfindung ist die Außentrommel drehbar an wenigstens einer Lagerplatte eines Rahmens gelagert, wobei eine Lagerung einer Stirnseite der Außentrommel mittels wenigstens drei an der Lagerplatte angeordneten Außenlagern erfolgt.

Auf diese Weise können die Außenlager gewartet werden, ohne die Außentrommel zu entfernen, da sie in einfacher Weise von außen her zugänglich sind. Auch ein Ausbau der Außentrommel kann dadurch wesentlich einfacher erfolgen.

An ihrem der Lagerplatte gegenüberliegenden Längsende kann die Außentrommel im Bereich einer zweiten Lagerplatte gelagert sein oder mittels einer Achse in einem Lagerbock gelagert sein.

In Weiterbildung der Erfindung ist die Außentrommel mit einem, insbesondere radial außerhalb der Außentrommel angeordneten, konzentrisch zur Außentrommel angeordneten Außenzahnkranz drehfest verbunden, wobei ein Drehantrieb an dem Außenzahnkranz angreift. Alternativ kann zum Antreiben der Außentrommel auch ein Zahnriemen oder eine Rollenkette zum Einsatz kommen.

Der Drehantrieb ist beispielsweise an der Lagerplatte angeordnet und als Servomotor ausgebildet. Durch Vorsehen eines Außenzahnkranzes kann der Antrieb in sehr einfacher Weise geprüft und gegebenenfalls gewartet werden.

Die der Erfindung zugrunde liegende Aufgabe wird auch durch eine Vorrichtung mit einem erfindungsgemäßen Tropfenformer und einem umlaufenden Band zum kontinuierlichen Ablegen von Produkttropfen gelöst, bei der der Tropfenformer verschiebbar auf einem Maschinenrahmen angeordnet ist und von einer Position oberhalb des umlaufenden Bands, das zum Ablegen von Produkttropfen, die mittels des Tropfenformers erzeugt werden, vorgesehen ist, in eine Serviceposition entfernt vom umlaufenden Band verschiebbar ist.

Der Tropfenformer kann dadurch in sehr einfacher Weise von einer Betriebsposition in eine Serviceposition bewegt werden. Zuführleitungen für den zu pastillierenden, fließfähigen Stoff müssen hierzu beweglich ausgeführt sein oder vor dem Verschieben des Tropfenformers in die Serviceposition getrennt werden.

In Weiterbildung der Erfindung ist der Tropfenformer auf einem Verschiebeschlitten oder Verschiebewagen angeordnet, der auf Führungsschienen des Maschinenrahmens verschiebbar angeordnet ist.

In Weiterbildung der Erfindung ist die Außentrommel mit einer Schutzabdeckung versehen, die sich bis zu einer Ebene erstreckt, in der ein Obertrum des umlaufenden Bands unterhalb der Außentrommel angeordnet ist.

Auf diese Weise kann die Außentrommel bzw. eine Umgebung der Außentrommel in einfacher Weise beheizt werden oder auch auf speziellen Umgebungsbedingungen gehalten werden, beispielsweise kann in der Umgebung der Außentrommel dadurch eine kontrollierte Luftfeuchte, eine kontrollierte Temperatur oder dergleichen gehalten werden. Dadurch wird das Eintrocknen bzw. Verfestigen des fließfähigen Stoffs verhindert oder zumindest erschwert.

Weitere Merkmale und Vorteile der Erfindung ergeben sich aus der folgenden Beschreibung einer bevorzugten Ausführungsform der Erfindung im Zusammenhang mit den Zeichnungen. In den Zeichnungen zeigen:
- Fig. 1: eine abschnittsweise Ansicht eines erfindungsgemäßen Tropfenformers von schräg oben,
- Fig. 2: eine abschnittsweise Schnittansicht des Tropfenformers der Fig. 1,
- Fig. 3: eine Ansicht des Tropfenformers der Fig. 1 in teilweise zerlegtem Zustand,
- Fig. 4: eine abschnittsweise Innenansicht eines Innenkörpers des Tropfenformers der Fig. 1,
- Fig. 5: eine Verteilleiste des Tropfenformers der Fig. 1,
- Fig. 6: eine weitere Ansicht des Tropfenformers der Fig. 1 in teilweise zerlegtem Zustand,
- Fig. 7: eine vergrößerte Einzelheit der Darstellung der Fig. 6,
- Fig. 8: eine Darstellung des Innenkörpers des Tropfenformers der Fig. 1,
- Fig. 9: eine weitere Darstellung des Tropfenformers der Fig. 1 in teilweise zerlegtem Zustand,
- Fig. 10: eine Ansicht auf den Tropfenformer der Fig. 1 von schräg oben bei abgenommener Außentrommel,
- Fig. 11: eine Ansicht einer Einzelheit des Tropfenformers der Fig. 1 und
- Fig. 12: eine Ansicht des Tropfenformers der Fig. 1 bei abgenommener Außentrommel in einer Demontageposition.

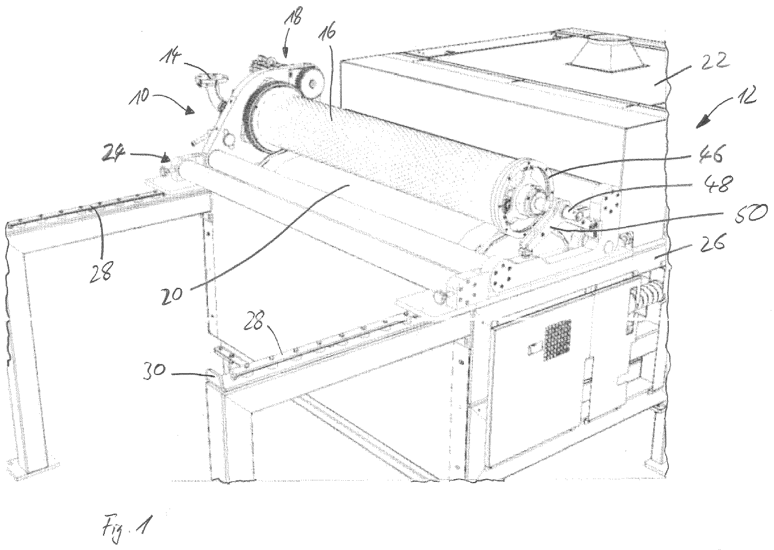

Fig. 1 zeigt einen erfindungsgemäßen Tropfenformer 10, der Teil einer Pastillieranlage 12 ist. Die Pastillieranlage bildet eine Vorrichtung mit einem Tropfenformer. Dem Tropfenformer 10 wird über einen Zuführanschluss 14 ein zu pastillierender, fließfähiger Stoff zugeführt. Der Zuführanschluss führt zu einem in Fig. 1 nicht erkennbaren Innenkörper in einer gelochten Außentrommel 16. Die Außentrommel 16 wird mittels einer Antriebseinheit 18 um ihre Längsachse, die in Fig. 1 von links oben nach rechts unten verläuft, gedreht. Der zu pastillierende, fließfähige Stoff wird mittels des Innenkörpers gegen die Innenwand der gelochten Außentrommel 16 gefördert und durch die Löcher in der Außentrommel hindurchgedrückt, wodurch Produkttropfen gebildet werden, die auf einem umlaufenden Band 20 abgelegt werden, das unter der gelochten Außentrommel 16 vorbeigeführt ist. Das umlaufende Band 20, beispielsweise ein Stahlband, bewegt die auf ihm abgelegten Produkttropfen in einen Kühl- und/oder Verfestigungsbereich 22, wo die abgelegten Produkttropfen auf dem Obertrum des Bands 20 verfestigen und am Ende des Obertrums von dem umlaufenden Band in Form von wenigstens teilweise verfestigten Pastillen abgenommen werden können.

Der erfindungsgemäße Tropfenformer ist in besonderer Weise für die Verarbeitung von abrasiven und/oder sedimentierenden fließfähigen Stoffen geeignet. Abrasive und/oder sedimentierende fließfähige Stoffe können zwar auch mit bekannten Tropfenformern verarbeitet werden, allerdings um den Preis eines sehr hohen Verschleißes, insbesondere der gelochten Außentrommel. Im Bereich des Innenkörpers von konventionellen Tropfenformern treten im Betrieb beim Pastillieren von sedimentierenden fließfähigen Stoffen Verstopfungen und/oder Ablagerungen auf, die die Produktqualität der hergestellten Pastillen beeinträchtigen.

Der Tropfenformer 10 weist einen Rahmen 24 auf, an dem die Antriebseinheit 18 befestigt ist und an dem die gelochte Außentrommel drehbar gelagert ist. An dem Rahmen 24 ist mittelbar auch der Innenkörper des Tropfenformers 10 befestigt, wobei der Innenkörper in der Darstellung der Fig. 1 nicht erkennbar ist. Der Rahmen 24 ruht auf einem Maschinenrahmen 26 der Pastillieranlage 12. Der Rahmen 24 ist verschiebbar auf zwei Führungsschienen 28 angeordnet, die parallel zu einer Bodenfläche verlaufen, auf der der Maschinenrahmen 26 steht. Der Rahmen 24 ist in geeigneter Weise verschiebbar auf den Führungsschienen 28 angeordnet und kann von der in Fig. 1 dargestellten Betriebsposition oberhalb des Obertrums des umlaufenden Bands 20 in eine Wartungsposition verschoben werden, in der der Tropfenformer 10 dann ausgehend von der in Fig. 1 dargestellten Betriebsposition nach links unten an das Ende der Führungsschienen 28 verschoben ist. Um eine solche Verschiebebewegung des Tropfenformers 10 zu begrenzen, weist wenigstens eine der Führungsschienen 28 einen Endanschlag 30 auf, an dem der Rahmen 24 in der nach links verschobenen Wartungsposition oder Serviceposition anschlagen kann. In der Wartungsposition ist der Tropfenformer 10 wesentlich besser zugänglich als in der Betriebsposition der Fig. 1. Insbesondere ist die Außentrommel 16 von allen Seiten her zugänglich.

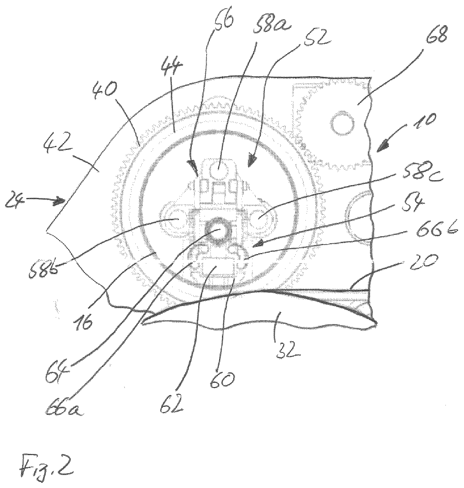

Fig. 2 zeigt eine abschnittsweise Schnittansicht des Tropfenformers 10 der Fig. 1, wobei das umlaufende Band 20 ebenfalls abschnittsweise dargestellt ist. Das umlaufende Band 20 wird im Bereich unterhalb des Tropfenformers 10 mittels einer Umlenkrolle 32 umgelenkt. Es ist Fig. 2 zu entnehmen, dass der Außenumfang der gelochten Außentrommel 16 in einem sehr geringen Abstand oberhalb des umlaufenden Bands 20 in dem Bereich angeordnet ist, in dem das umlaufende Band 20 auf dem Außenumfang der Rolle 32 aufliegt. Die durch die gelochte Außentrommel 16 hindurch ausgegebenen Produkttropfen gelangen dadurch auf einen Bereich des umlaufenden Bands 20, der kurz vor der Linie liegt, an der das Obertrum des umlaufenden Bands 20 von der Umlenkrolle 32 abhebt.

Fig. 2 lässt erkennen, dass die gelochte Außentrommel 16 an ihrem einen Ende mit einer Nabe 44 verbunden ist, die wiederum mit einem Außenzahnkranz 40 verbunden ist, wobei die Nabe 44 mittels eines Außenlagers drehbar gelagert ist, das an einer Stirnplatte 42 des Rahmens 24 angeordnet ist. Das Außenlager ist mittels wenigstens drei, an der Stirnplatte 42 oder Lagerplatte befestigten Lagerrollen und einem an den Lagerrollen drehbar gehaltenen Umfang der Nabe 44 gebildet. An der Nabe 44 sind der Außenzahnkranz 40 und die gelochte Außentrommel 16 drehfest befestigt.

Dieses Außenlager und seine drei Lagerrollen sind in Fig. 1 und Fig. 2 verdeckt.

An der, der Stirnplatte 42 gegenüberliegenden Längsseite der gelochten Außentrommel 16 ist eine zweite Nabe 46 drehfest mit der gelochten Außentrommel 16 verbunden, wobei die zweite Nabe 46 wiederum mittels einer Steckachse 48 in einem Lagerbock 50 des Rahmens 24 drehbar gelagert ist, siehe Fig. 1.

Innerhalb der gelochten Außentrommel 16 ist ein Stator 52 des Tropfenformers 10 zu erkennen. Der Stator 52 bleibt im Betrieb des Tropfenformers 10 in der in Fig. 2 dargestellten Lage, während sich die gelochte Außentrommel 16 dreht, und eine in Fig. 2 unten liegende Seite des Stators 52 liegt dadurch auf dem Innenumfang der gelochten Außentrommel 16 auf. Der Stator 52 liegt mit dem Innenkörper 54 auf dem Innenumfang der gelochten Außentrommel 16 auf. Durch die auf dem Innenumfang der gelochten Außentrommel 16 aufliegende Unterseite des Innenkörpers 54 wird der zu pastillierende fließfähige Stoff durch die Löcher der gelochten Außentrommel 16 hindurchgedrückt, wodurch Produkttropfen aus dem fließfähigen Stoff gebildet werden, die dann auf der Oberseite des umlaufenden Bands 20 abgelegt werden. Die Umlenkrolle 32 dreht sich in der Darstellung der Fig. 2 im Uhrzeigersinn, so dass die mittels der gelochten Außentrommel 16 erzeugten Produkttropfen auf dem umlaufenden Band 20 abgelegt werden und in Fig. 2 nach rechts auf dem Obertrum des umlaufenden Bands 20 abtransportiert werden.

Der Stator 52 weist, wie bereits ausgeführt wurde, den Innenkörper 54 auf sowie einen Haltekäfig 56, der mittels drei Tragstangen 58a, 58b und 58c gebildet ist.

Die in Fig. 2 unteren beiden Tragstangen 58b, 58c sind horizontal nebeneinander angeordnet, wohingegen die Tragstange 58a oberhalb der beiden Tragstangen 58b, 58c angeordnet ist. In der Schnittansicht der Fig. 2 bilden die Tragstangen 58a, 58b, 58c dadurch eine im Querschnitt dreieckförmige Konfiguration.

An dem Haltekäfig 56 des Stators 52 ist der Innenkörper 54 so gehalten, dass der Innenkörper 54 ausschließlich unter Wirkung der Schwerkraft an der Innenseite der im Betrieb rotierenden gelochten Außentrommel 16 anliegt. Der Innenkörper 54 wird infolgedessen nur durch sein Eigengewicht und das Gewicht des sich im Betrieb innerhalb des Innenkörpers befindlichen fließfähigen Stoffs gegen den Innenumfang der gelochten Außentrommel gedrückt. Das Eigengewicht des Innenkörpers 54 ist so bemessen, dass der durch das Eigengewicht verursachte Anpressdruck ausreicht, um den zu pastillierenden fließfähigen Stoff durch die Löcher in der gelochten Außentrommel 16 hindurchzudrücken und dadurch Produkttropfen zu erzeugen. Auf der anderen Seite kann durch diese schwimmende Lagerung des Innenkörpers auf dem Innenumfang der gelochten Außentrommel 16 der Innenkörper 54 nach oben ausweichen und somit in geringem Maße von dem Innenumfang der gelochten Außentrommel 16 abheben, wenn beispielsweise größere Partikel, Agglomerationen aus festen Partikeln oder verfestigte Produktreste des fließfähigen Stoffs auf dem Innenumfang der gelochten Außentrommel 16 angeordnet sind und dann mit der Bewegung der gelochten Außentrommel 16 zwischen den Innenumfang der gelochten Außentrommel 16 und die Unterseite des Innenkörpers 54 bewegt werden. Es hat sich herausgestellt, dass durch diese schwimmende Anordnung des Innenkörpers 54 bzw. dadurch, dass der Innenkörper 54 ausschließlich unter Wirkung der Schwerkraft an der Innenseite der rotierenden Außentrommel 16 anliegt, ein Verschleiß der Unterseite des Innenkörpers 54 und des Innenumfangs der gelochten Außentrommel 16 erheblich reduziert werden kann, wenn abrasive und/oder sedimentierende fließfähige Stoffe pastilliert werden. Trotz dieser schwimmenden Lagerung kann mit dem erfindungsgemäßen Tropfenformer 10 eine ausgezeichnete Qualität der hergestellten Pastillen erzielt werden.

Der Innenkörper 54 wird infolgedessen in der in Fig. 2 dargestellten Position gehalten, auch wenn sich die gelochte Außentrommel 16 in Fig. 2 in oder entgegen dem Uhrzeigersinn dreht. Hierzu weist der Haltekäfig 56 seitliche Anschläge für den Innenkörper 54 auf, die eine Bewegung des Innenkörpers 54 in Fig. 2 nach oben und unten, nicht aber nach links oder nach rechts ermöglichen.

Wie noch erläutert werden wird, ist der Haltekäfig 56 mit einer Hubvorrichtung versehen, um den Innenkörper 54 ausgehend von der in Fig. 2 dargestellten Betriebsposition, in der eine Unterseite des Innenkörpers 54 an dem Innenumfang der gelochten Außentrommel 16 anliegt, in eine Wartungsposition anzuheben, in der die Unterseite des Innenkörpers 54 von dem Innenumfang der gelochten Außentrommel 16 abgehoben ist.

In Fig. 2 ist bereits zu erkennen, dass die Unterseite des Innenkörpers 54 mittels eines Gleitstücks 60 gebildet ist, das Durchlässe für den zu pastillierenden fließfähigen Stoff aufweist. Der fließfähige Stoff wird mittels einer in Fig. 2 lediglich schematisch dargestellten Verteilleiste am Innenkörper in Richtung auf das Gleitstück 60 befördert. In Fig. 2 weiter zu erkennen ist ein zentraler Zuführkanal 64 im Innenkörper 54, über den der zu pastillierende fließfähige Stoff längs des Innenkörpers 54 verteilt wird und der in Strömungsverbindung mit dem Zuführanschluss 14, vgl. Fig. 1, steht.

Wie noch erläutert werden wird, ist der Innenkörper 54 bei der dargestellten Ausführungsform aus einem Metallblock gebildet, der mit zwei im Querschnitt nierenförmigen Heizkanälen 66a, 66b versehen ist. Die im Querschnitt nierenförmigen Heizkanäle 66a, 66b umgeben in dem in Fig. 2 dargestellten Querschnitt die Verteilleiste 62 abschnittsweise. Dadurch kann sichergestellt werden, dass der fließfähige Stoff in der Verteilleiste 62 auf einer Temperatur gehalten wird, bei der nicht zu befürchten ist, dass der fließfähige Stoff verfestigt.

Um die gelochte Außentrommel 16 zusammen mit der Nabe 44 und dem Außenzahnkranz 40 zu drehen, kämmt ein Antriebszahnrad 68 der Antriebseinheit 18 mit dem Außenzahnkranz 40. Das Antriebszahnrad 68 wird wiederum mittels eines Motors, beispielsweise eines elektrischen Servomotors, der Antriebseinheit 18 gedreht, so dass die gelochte Außentrommel 16 relativ zu dem stillstehenden Stator 52 und relativ zum Rahmen 24 gedreht werden kann. Wie bereits ausgeführt wurde, kann eine Drehung der gelochten Außentrommel 16 in Fig. 2 in oder entgegen dem Uhrzeigersinn erfolgen.

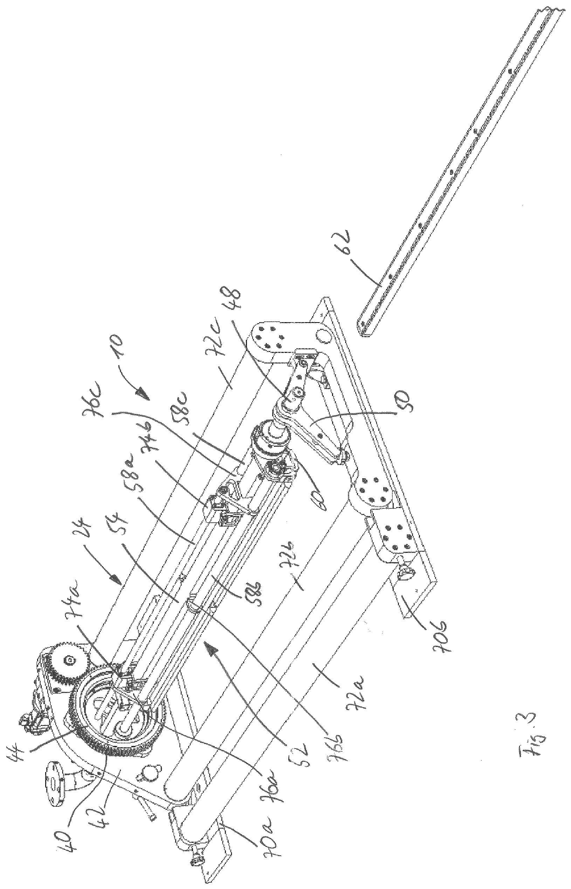

Fig. 3 zeigt eine Darstellung des Tropfenformers 10 der Fig. 1 in teilweise zerlegtem Zustand. Es ist Fig. 3 zu entnehmen, dass die gelochte Außentrommel 16 zusammen mit der zweiten Nabe 46 abgenommen wurde. Die erste Nabe 44 ist dahingegen am Rahmen 24 verblieben und weiter mittels der drei Außenlager drehbar an der Stirnplatte 42 befestigt. Auch bei abgenommener Außentrommel 16 verbleibt der Außenzahnkranz 40 an der Nabe 44.

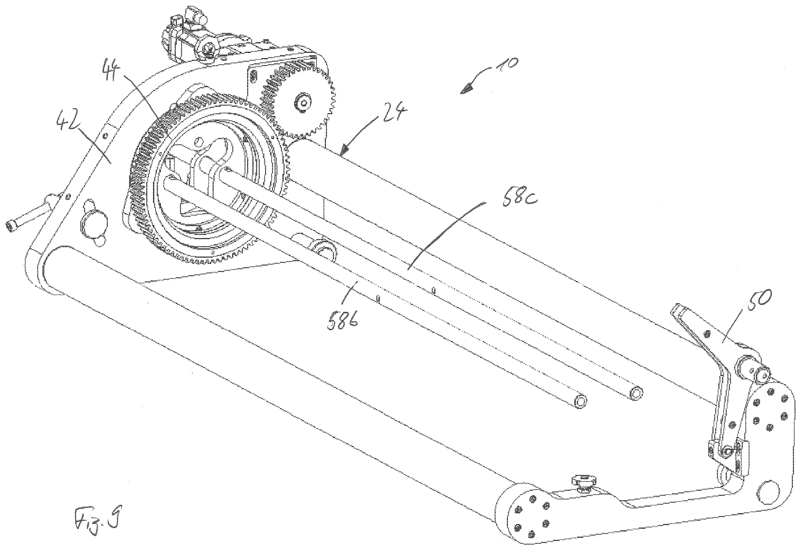

Der Rahmen 24 weist die Stirnplatte 42, einen mit der Stirnplatte 42 verbundenen ersten Basisträger 70a und einen parallel zum ersten Basisträger angeordneten zweiten Basisträger 70b auf. Die beiden Basisträger 70a, 70b sind mit drei Rahmenstangen 72a, 72b, 72c miteinander verbunden, die parallel zu einer Drehachse der gelochten Außentrommel 16 und der ersten Nabe 44 verlaufen. Die Steckachse 48 ist in dem Lagerbock 50 drehbar gelagert, wobei der Lagerbock 50 schwenkbar am Rahmen 24 angeordnet ist, was noch erläutert werden wird, siehe beispielsweise Fig. 9.

Fig. 3 lässt den Stator 52 mit dem aus den drei Tragstangen 58a, 58b und 58c bestehenden Haltekäfig erkennen. Der Innenkörper 54 ist mittels zweier Hubvorrichtungen 74a, 74b mit dem Haltekäfig verbunden. Fig. 3 lässt auch drei Anschlagplatten 76a, 76b und 76c erkennen, die einerseits die drei Tragstangen 58a, 58b, 58c miteinander verbinden und andererseits einen seitlichen Anschlag für den Innenkörper 54 bilden, so dass dieser in und entgegen der Drehrichtung der gelochten Außentrommel 16 fixiert ist.

Wie bereits ausgeführt wurde, kann der Innenkörper 54 mittels der Hubvorrichtungen 74a, 74b relativ zur gelochten Außentrommel 16 und damit auch relativ zum Rahmen 24 angehoben bzw. abgesenkt werden.

In der Darstellung der Fig. 3 ist an der Unterseite des Innenkörpers das Gleitstück 60 zu erkennen, wohingegen die Verteilleiste 62 bereits parallel zur Längsachse, also auch parallel zu den Tragstangen 58a, 58b und 58c, aus dem Innenkörper 54 herausgezogen wurde.

Die Verteilleiste 62 kann in einfacher Weise parallel zur Längsachse bzw. Drehachse der gelochten Außentrommel 16 aus dem Innenkörper 54 herausgezogen werden. Dadurch kann die Verteilleiste 62 in sehr einfacher Weise ersetzt und/oder gewartet werden.

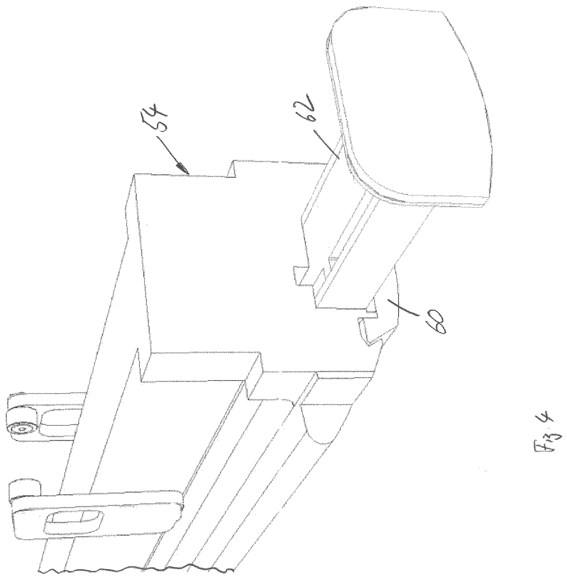

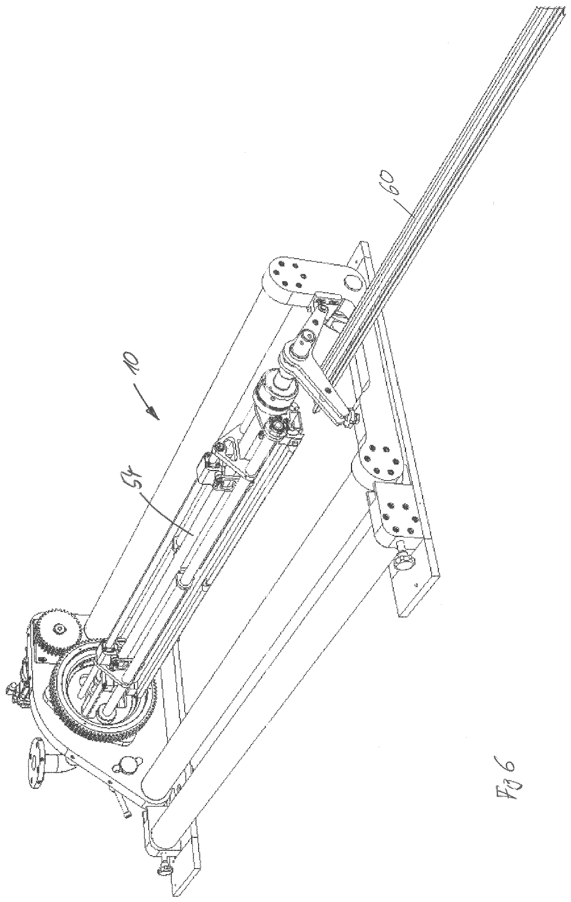

Auch das Gleitstück 60, vgl. Fig. 4 und Fig. 6, kann in axialer Richtung, also parallel zur Längsachse bzw. Drehachse der gelochten Außentrommel 16, aus dem Innenkörper 54 herausgezogen werden.

Fig. 4 lässt erkennen, dass das Gleitstück 60 als langgestreckte Profilleiste ausgebildet ist, die mittels einer Schwalbenschwanzverbindung bzw. mittels zweier Hinterschnitte an beiden Seiten des Gleitstücks 60 mit einer passenden Führung am Innenkörper 54 verbunden ist. Fig. 4 lässt weiter erkennen, dass die Verteilleiste 62 ebenfalls in axialer Richtung aus dem Innenkörper herausgezogen werden kann. Im Zustand der Fig. 4 ist die Verteilleiste 62 bereits ein Stück weit aus dem Innenkörper 54 herausgezogen worden, das Gleitstück 60 ist hingegen noch in der Position, in der es vollständig in die Führung am Innenkörper 54 eingeschoben ist.

Fig. 4 stellt keine Schnittansicht dar, so dass, vgl. Fig. 2, der Zuführkanal 64 und die im Querschnitt nierenförmigen Heizkanäle 66a, 66b in Fig. 4 nicht zu erkennen sind.

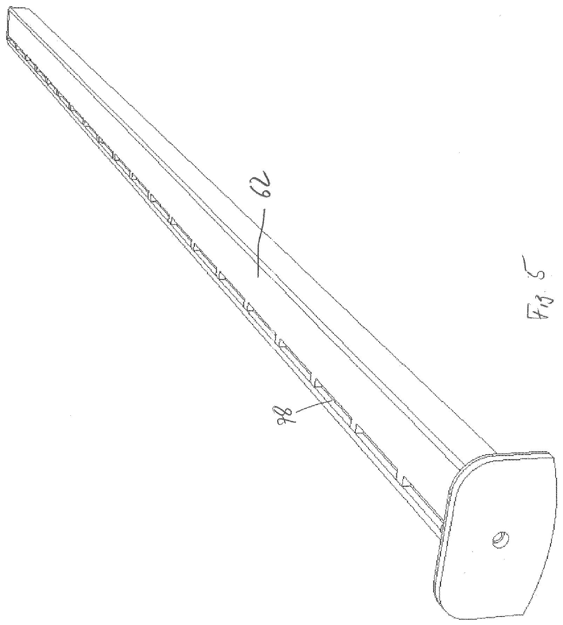

Fig. 5 zeigt die Verteilleiste 62 im vollständig ausgezogenen Zustand. Die Verteilleiste 62 weist über ihre Länge gesehen mehrere Zuführschlitze 78 auf, die zu einer gleichmäßigen Verteilung des über den Zuführkanal 64 zugeführten fließfähigen Stoffs über die gesamte Länge der Verteilleiste 62 beitragen.

Fig. 6 zeigt eine der Fig. 3 vergleichbare Ansicht des erfindungsgemäßen Tropfenformers 10, wobei im Zustand der Fig. 6 die Verteilleiste 62 bereits vollständig aus dem Innenkörper 54 entfernt wurde und auch das Gleitstück 60 nun vollständig aus der Führung am Innenkörper 54 herausgezogen wurde.

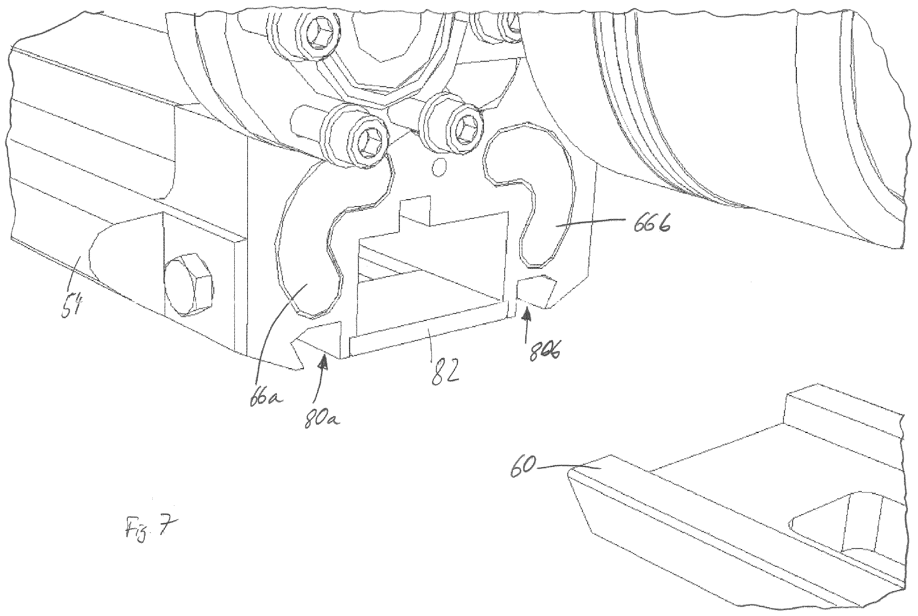

Fig. 7 zeigt eine vergrößerte Darstellung einer Einzelheit der Fig. 6. Eine Stirnplatte des Innenkörpers 54 ist im Zustand der Fig. 6 und 7 abgenommen worden, so dass die im Querschnitt nierenförmigen Heizkanäle 66a, 66b im Innenkörper 54 zu erkennen sind. Weiter zu erkennen ist noch ein Abschnitt des Gleitstücks 60 sowie die beiden zum Gleitstück 60 passenden, einseitig hinterschnittenen Führungen 80a, 80b am Innenkörper 54. Zwischen der Verteilleiste 62, die im Zustand der Fig. 7 vollständig entfernt ist, und dem Gleitstück 60, das in Fig. 7 ebenfalls vollständig aus dem Innenkörper 54 herausgezogen wurde, ist noch eine Trennplatte 82 des Innenkörpers 54 vorgesehen, die die Verteilleiste 62 im Innenkörper 54 gegen Herausfallen hält und die mit Öffnungen versehen ist, um den zu pastillierenden fließfähigen Stoff aus der Verteilleiste in Richtung auf das Gleitstück 60 und den Innenumfang der gelochten Außentrommel 16 zu leiten.

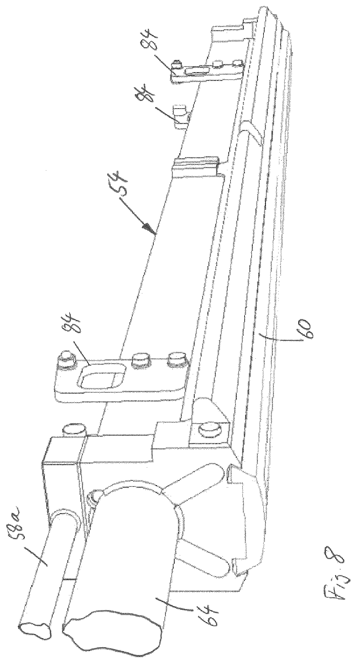

Fig. 8 zeigt den Innenkörper 54 von der Seite des Zuführanschlusses 14 her, siehe Fig. 1. Zu erkennen ist das Gleitstück 60 am Innenkörper sowie Verbindungsstücke 84, die den Innenkörper 54 mit den in Fig. 8 nicht dargestellten Hubvorrichtungen 74a, 74b, vgl. Fig. 3, verbinden. Zu erkennen ist in Fig. 8 ein Abschnitt des Zuführkanals 64, der mit dem Zuführanschluss 14, siehe Fig. 1, verbunden ist, und mit dem der zu pastillierende fließfähige Stoff in den Innenkörper 54 eingebracht wird.

Ebenfalls zu erkennen ist noch ein Abschnitt der oberen Tragstange 58a.

Fig. 9 zeigt eine Darstellung des erfindungsgemäßen Tropfenformers 10 von schräg oben, wobei im Unterschied zur Darstellung der Fig. 3 nicht nur die gelochte Außentrommel 16 abgenommen wurde, sondern der vollständige Innenkörper 54 sowie auch die obere Tragstange 58a und die Hubvorrichtungen 74a, 74b entfernt wurden. Auch die der Nabe 44 gegenüberliegende Nabe 46, vgl. Fig. 1, wurde zusammen mit der Steckachse 48 entfernt.

Lediglich die beiden unteren Tragstrangen 58b, 58c sind noch mit der Stirnplatte 42 des Rahmens 24 verbunden.

Der gesamte Innenkörper 54 kann zusammen mit den Anschlagplatten 76a, 76b, 76c und den Hubvorrichtungen 74a, 74b von den Tragstangen 58b, 58c in Längsrichtung, in Fig. 9 also nach rechts unten, abgezogen werden. Die obere Tragstange 58a wird bei der dargestellten Ausführungsform hierbei ebenfalls mit abgezogen, wobei dies im Rahmen der Erfindung nicht notwendigerweise der Fall ist. Die Tragstange 58a kann auch zusammen mit den Tragstangen 58b, 58c mit der Stirnplatte 42 verbunden bleiben, wenn der Innenkörper 54 in Längsrichtung abgezogen wird.

Um das Abziehen des Innenkörpers 54 von den Tragstangen 58b, 58c zu ermöglichen der Lagerbock 50 an der, der Stirnplatte 42 gegenüberliegenden Seite des Rahmens 24 nach oben verschwenkt werden. Diese nach oben verschwenkte Position ist in Fig. 9 dargestellt. Durch das Verschwenken des Lagerbocks 50 ist es möglich, den Innenkörper 54 von den Tragstangen 58b, 58c abzuziehen.

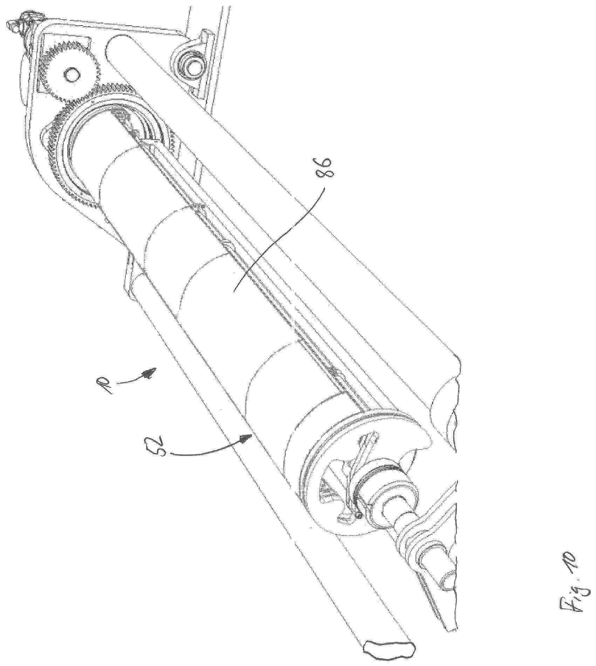

Fig. 10 zeigt eine weitere Ansicht des erfindungsgemäßen Tropfenformers 10 in einer Ansicht von schräg oben, wobei die gelochte Außentrommel 16 abgenommen wurde. Der Stator 52 weist eine Segment-Flächenheizung 86 auf, die sich parallel zur Längsachse und parallel zu der in Fig. 10 nicht dargestellten gelochten Außentrommel 16 erstreckt, mit anderen Worten also die Form eines Zylindersegments hat. Ein Außenumfang der Segment-Flächenheizung 86 ist dadurch in konstantem Abstand zum Innenumfang der gelochten Außentrommel angeordnet. Die Segment-Flächenheizung erstreckt sich im Querschnitt gesehen über einen Winkel von mehr als 180° entlang des Innenumfangs der gelochten Außentrommel 16. Im Rahmen der Erfindung kann sich die Segment-Flächenheizung 86 bis nahe an das Gleitstück 60 erstrecken, um den Innenumfang der gelochten Außentrommel 16 mit Ausnahme des Abschnitts, in dem das Gleitstück auf dem Innenumfang aufliegt, zu beheizen. Dadurch kann erreicht werden, dass der zu pastillierende fließfähige Stoff, der sich noch in den Löchern der gelochten Außentrommel 16 befindet, nicht verfestigt, sondern dann, wenn dieser fließfähige Stoff wieder in den Bereich unterhalb des Gleitstücks gelangt, radial nach außen durch die Löcher in der Außentrommel 16 hindurch ausgepresst wird, um einen Produkttropfen zu bilden. Im Rahmen der Erfindung kann sich die Segment-Flächenheizung aber auch über einen Winkel von gerade 180° entlang dem Innenumfang der gelochten Außentrommel 16 erstrecken.

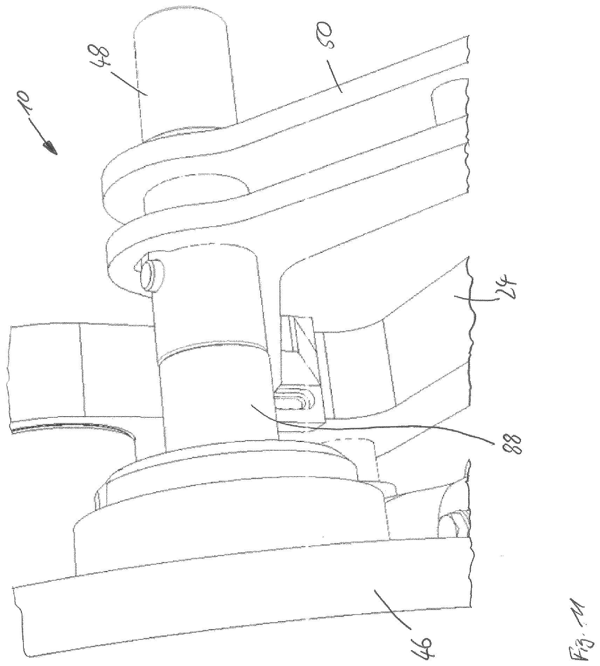

Fig. 11 zeigt eine abschnittsweise Darstellung des Tropfenformers 10 im Bereich des Lagerbocks 50. Die Nabe 46, siehe Fig. 1, ist abschnittsweise zu erkennen und ein Achsenabschnitt 88 der Nabe 46 ist in die Steckachse 48 eingesteckt, die wiederum am Lagerbock 50 gehalten ist. Weiter ist ein Abschnitt des Rahmens 24 zu erkennen, an dem der Lagerbock 50 an einem Ende schwenkbar gelagert ist und auf dem der Lagerbock 50 mit seinem anderen Ende aufliegt, siehe Fig. 1.

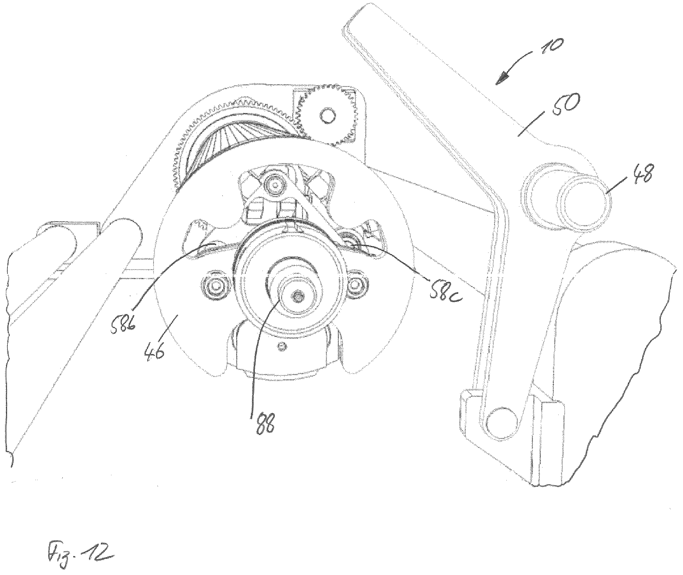

Die Steckachse 48 kann in Fig. 11 ein Stück weit nach rechts aus dem Lagerbock 50 herausgezogen werden. Damit liegt der Achsenabschnitt 88 der Nabe 46 frei. Nach Verschwenken des Lagerbocks 50 nach oben, siehe Fig. 12, kann die gelochte Außentrommel zusammen mit der Nabe 46 abgezogen werden und anschließen kann auch der Innenkörper von den in Fig. 11 nicht erkennbaren Tragstangen in Längsrichtung abgezogen werden.

Fig. 12 zeigt den Tropfenformer 10 in einer weiteren Ansicht bei nach oben verschwenktem Lagerbock 50. Die Steckachse 48 wurde so weit von dem Achsenabschnitt 88 abgezogen, siehe Fig. 11, dass der Lagerbock 50 nach oben verschwenkt werden konnte. Der Achsenabschnitt 88 der Nabe 46 ragt damit frei vor. Nach Lösen von Befestigungsmuttern kann in dem Zustand der Fig. 12 nun die Nabe 46 sowie auch der Innenkörper und weitere Teile des Stators 52 in Längsrichtung der Tragstangen 58b, 58c abgezogen werden, bis der Zustand der Fig. 9 erreicht ist.

### Bezugszeichenliste

- 10: Tropfenformer
- 12: Pastillieranlage
- 14: Zuführanschluss
- 16: gelochte Außentrommel
- 18: Antriebseinheit
- 20: umlaufendes Band
- 22: Abdeckhaube
- 24: Rahmen
- 26: Maschinenrahmen
- 28: Führungsschienen
- 30: Endanschlag
- 32: Umlenkrolle
- 40: Außenzahnkranz
- 42: Stirnplatte
- 44: erste Nabe
- 46: zweite Nabe
- 48: Steckachse
- 50: Lagerbock
- 52: Stator
- 54: Innenkörper
- 56: Haltekäfig
- 58a, 58b, 58c: Tragstangen
- 60: Gleitstück
- 62: Verteilleiste
- 64: Zuführkanal
- 66a, 66b: Heizkanäle
- 68: Antriebszahnrad
- 70a, 70b: Basisträger
- 72a, 72b, 72c: Rahmenstangen
- 74a, 74b: Hubvorrichtung
- 76a, 76b, 76c: Anschläge
- 78: Schlitze
- 80a, 80b: Führungen
- 82: Trennplatte
- 84: Halteteile
- 86: Segment-Flächenheizung
- 88: Achsabschnitt

## Patentansprüche

1. Tropfenformer (10) zum Herstellen von Pastillen aus einem fließfähigen Stoff, mit einer gelochten Außentrommel (16), die um ihre Längsachse drehbar gelagert ist, mit einem innerhalb der Außentrommel (16) angeordneten Innenkörper (54) wobei der Innenkörper (54) mit wenigstens einem Zuführkanal (64) für den fließfähigen Stoff versehen ist und wobei der Innenkörper (54) im Betrieb des Tropfenformers (10) den fließfähigen Stoff in Richtung auf eine Innenseite der Außentrommel (16) ausgibt, **dadurch gekennzeichnet, dass** der Innenkörper (54) ausschließlich unter Wirkung der Schwerkraft an der Innenseite der rotierenden Außentrommel (16) anliegt.

2. Tropfenformer nach Anspruch 1, **dadurch gekennzeichnet, dass** am Innenkörper ein Gleitschuh angeordnet ist, wobei wenigstens eine Kontaktfläche des Gleitschuhs, die an einem Innenumfang der Außentrommel anliegt, aus einem weicheren Material als der Innenumfang der Außentrommel gebildet ist.

3. Tropfenformer nach Anspruch 2, **dadurch gekennzeichnet, dass** der Innenkörper mit wenigstens zwei Heizkanälen (66a, 66b) versehen ist.

4. Tropfenformer nach Anspruch 2 oder 3, **dadurch gekennzeichnet, dass** an dem Innenkörper (54) eine Verteilleiste (62) vorgesehen ist, mittels der das fließfähige Medium mehrfach umgelenkt und in Richtung auf den Innenumfang der Außentrommel ausgegeben wird.

5. Tropfenformer nach wenigstens einem der vorstehenden Ansprüche 2 bis 4, **dadurch gekennzeichnet, dass** die Verteilleiste (62) und/oder der Gleitschuh in Längsrichtung der Außentrommel vollständig ausziehbar an dem Innenkörper angeordnet sind.

6. Tropfenformer nach wenigstens einem der vorstehenden Ansprüche, **dadurch gekennzeichnet, dass** der Innenkörper Teil eines innerhalb der Außentrommel angeordneten Stators (52) ist, wobei der Stator wenigstens eine Tragstange (58a, 58b, 58c) aufweist und der Innenkörper mittels der wenigstens einen Tragstange innerhalb der Außentrommel in und entgegen der Drehrichtung der Außentrommel gehalten ist.

7. Tropfenformer nach Anspruch 6, **dadurch gekennzeichnet, dass** der Stator (52) eine Hubvorrichtung (74a, 74b) aufweist, die einerseits mit der Tragstange und andererseits mit dem Innenkörper verbunden ist, wobei mittels der Hubvorrichtung der Innenkörper auf den Innenumfang der Außentrommel abgesenkt und vom Innenumfang der Außentrommel abgehoben werden kann.

8. Tropfenformer nach Anspruch 6 oder 7, **dadurch gekennzeichnet, dass** die Tragstange Teil eines Haltekäfigs (56) bildet, an dem der Innenkörper gegenüber Bewegungen in und entgegen der Drehrichtung der Außentrommel gehalten ist.

9. Tropfenformer nach Anspruch 8, **dadurch gekennzeichnet, dass** der Haltekäfig (56) drei parallel zueinander verlaufende Tragstangen aufweist.

10. Tropfenformer nach wenigstens einem der vorstehenden Ansprüche 6-9, **dadurch gekennzeichnet, dass** der Stator mit einer Segment-Flächenheizung (86) versehen ist, wobei die Segment-Flächenheizung (86) innerhalb der Außentrommel angeordnet ist, sich parallel zur Außentrommel erstreckt und im Querschnitt gesehen sich über einen Winkel von mehr als 180 Grad entlang des Innenumfangs der Außentrommel erstreckt.

11. Tropfenformer nach wenigstens einem der vorstehenden Ansprüche, **dadurch gekennzeichnet, dass** die Außentrommel drehbar an wenigstens einer Lagerplatte eines Rahmens gelagert ist, wobei eine Lagerung einer Stirnseite der Außentrommel mittels wenigstens drei an der Lagerplatte angeordneten Außenlagern erfolgt.

12. Tropfenformer nach wenigstens einem der vorstehenden Ansprüche, **dadurch gekennzeichnet, dass** die Außentrommel mit einem radial außerhalb der Außentrommel und konzentrisch zur Außentrommel angeordneten Außenzahnkranz (40) drehfest verbunden ist und wobei ein Drehantrieb an dem Außenzahnkranz (40) angreift.

13. Vorrichtung mit einem Tropfenformer nach wenigstens einem der vorstehenden Ansprüche und einem umlaufenden Band (20) zum Ablegen von Produkttropfen, **dadurch gekennzeichnet, dass** der Tropfenformer verschiebbar auf einem Maschinenrahmen angeordnet ist und von einer Position oberhalb des umlaufenden Bandes (20), das zum Ablegen von Produkttropfen, die mittels des Tropfenformers erzeugt werden, vorgesehen ist, in eine Serviceposition entfernt vom umlaufenden Band (20) verschiebbar ist.

14. Vorrichtung nach Anspruch 13, **dadurch gekennzeichnet, dass** der Tropfenformer auf einem Verschiebeschlitten oder Verschiebewagen angeordnet ist, der auf Führungsschienen des Maschinenrahmens verschiebbar angeordnet ist.

15. Vorrichtung nach Anspruch 13 oder 14, **dadurch gekennzeichnet, dass** die Außentrommel mit einer Schutzabdeckung versehen ist, die sich bis zu einer Ebene erstreckt, in der ein Obertrum des umlaufenden Bandes unterhalb der Außentrommel angeordnet ist.

## Claims

1. Drop former (10) for producing pastilles from a free-flowing substance, having a perforated outer drum (16) which is mounted so as to be rotatable about its longitudinal axis, having an inner body (54) disposed within the outer drum (16), wherein the inner body (54) is provided with at least one feed channel (64) for the free-flowing substance, and wherein the inner body (54) dispenses the free-flowing substance in the direction of an inner side of the outer drum (16) during operation of the drop former (10), **characterized in that** the inner body (54) rests on the inner side of the rotating outer drum (16) exclusively under the influence of gravity.

2. Drop former according to Claim 1, **characterized in that** a sliding shoe is disposed on the inner body, wherein at least one contact surface of the sliding shoe that rest on an inner circumference of the outer drum is formed from a softer material than the inner circumference of the outer drum.

3. Drop former according to Claim 2, **characterized in that** the inner body is provided with at least two heating ducts (66a, 66b).

4. Drop former according to Claim 2 or 3, **characterized in that** provided on the inner body (54) is a distributor strip (62) by means of which the free-flowing medium is deflected multiple times and discharged in the direction of the inner circumference of the outer drum.

5. Drop former according to at least one of preceding Claims 2 to 4, **characterized in that** the distributor strip (62) and/or the sliding shoe are/is disposed on the inner body so as to be fully extractable in the longitudinal direction of the outer drum.

6. Drop former according to at least one of the preceding claims, **characterized in that** the inner body is part of a stator (52) disposed within the outer drum, wherein the stator has at least one support rod (58a, 58b, 58c) and the inner body is held within the outer drum in and counter to the direction of rotation of the outer drum by means of the at least one support rod.

7. Drop former according to Claim 6, **characterized in that** the stator (52) has a lifting device (74a, 74b) which is connected on the one hand to the support rod and on the other hand to the inner body, wherein the inner body can be lowered onto the inner circumference of the outer drum and lifted from the inner circumference of the outer drum by means of the lifting device.

8. Drop former according to Claim 6 or 7, **characterized in that** the support rod forms part of a holding cage (56) on which the inner body is held with respect to movements in and counter to the direction of rotation of the outer drum.

9. Drop former according to Claim 8, **characterized in that** the holding cage (56) has three support rods running parallel to one another.

10. Drop former according to at least one of preceding Claims 6 to 9, **characterized in that** the stator is provided with a segment surface heater (86), wherein the segment surface heater (86) is disposed within the outer drum, extends parallel to the outer drum and, when viewed in cross section, extends over an angle of more than 180 degrees along the inner circumference of the outer drum.

11. Drop former according to at least one of the preceding claims, **characterized in that** the outer drum is rotatably mounted on at least one bearing plate of a frame, wherein mounting of an end side of the outer drum is performed by means of at least three outer bearings disposed on the bearing plate.

12. Drop former according to at least one of the preceding claims, **characterized in that** the outer drum is co-rotationally connected to an outer ring gear (40) disposed radially outside the outer drum and concentrically with the latter, and wherein a rotary drive engages on the outer ring gear (40).

13. Device having a drop former according to at least one of the preceding claims and a revolving belt (20) for depositing product drops, **characterized in that** the drop former is disposed so as to be displaceable on a machine frame and is displaceable from a position which is above the revolving belt (20) provided for depositing product drops generated by means of the drop former, to a servicing position remote from the revolving belt (20).

14. Device according to Claim 13, **characterized in that** the drop former is disposed on a displacement slide or displacement carriage which is disposed so as to be displaceable on guide rails of the machine frame.

15. Device according to Claim 13 or 14, **characterized in that** the outer drum is provided with a protective cover which extends as far as a plane in which an upper strand of the revolving belt is disposed below the outer drum.

## Revendications

1. Machine de formation de gouttes (10) destinée à la production de pastilles à partir d'une matière fluide, avec un tambour extérieur (16) perforé, qui est monté de manière à pouvoir tourner autour de son axe longitudinal, avec un corps intérieur (54) disposé à l'intérieur du tambour extérieur (16), le corps intérieur (54) étant pourvu d'au moins un canal d'alimentation (64) pour la matière fluide, et le corps intérieur (54) distribuant la matière fluide en direction d'un côté intérieur du tambour extérieur (16) pendant le fonctionnement de la machine de formation de gouttes (10), **caractérisée en ce que** le corps intérieur (54) repose sur le côté intérieur du tambour extérieur (16) rotatif exclusivement sous l'action de la gravité.

2. Machine de formation de gouttes selon la revendication 1, **caractérisée en ce qu'**un patin de glissement est disposé sur le corps intérieur, au moins une surface de contact du patin de glissement, qui repose sur une périphérie intérieure du tambour extérieur, étant formée à partir d'un matériau plus mou que la périphérie intérieure du tambour extérieur.

3. Machine de formation de gouttes selon la revendication 2, **caractérisée en ce que** le corps intérieur est pourvu d'au moins deux canaux de chauffage (66a, 66b).

4. Machine de formation de gouttes selon la revendication 2 ou 3, **caractérisée en ce qu'**est prévue sur le corps intérieur (54) une baguette de répartition (62), par laquelle le milieu fluide est dévié plusieurs fois et est distribué en direction de la périphérie intérieure du tambour extérieur.

5. Machine de formation de gouttes selon au moins l'une des revendications précédentes 2 à 4, **caractérisée en ce que** la baguette de répartition (62) et/ou le patin de glissement sont disposés sur le corps intérieur de manière à pouvoir être complètement retirés dans le sens longitudinal du tambour extérieur.

6. Machine de formation de gouttes selon au moins l'une des revendications précédentes, **caractérisée en ce que** le corps intérieur fait partie d'un stator (52) disposé à l'intérieur du tambour extérieur, le stator comportant au moins une tige de support (58a, 58b, 58c) et le corps intérieur étant maintenu à l'intérieur du tambour extérieur dans le sens de rotation du tambour extérieur et dans le sens contraire au sens de rotation du tambour extérieur au moyen de l'au moins une tige de support.

7. Machine de formation de gouttes selon la revendication 6, **caractérisée en ce que** le stator (52) comporte un dispositif de levage (74a, 74b), qui est relié d'une part à la tige de support et d'autre part au corps intérieur, le corps intérieur pouvant être abaissé sur la périphérie intérieure du tambour extérieur et soulevé de la périphérie intérieure du tambour extérieur au moyen du dispositif de levage.

8. Machine de formation de gouttes selon la revendication 6 ou 7, **caractérisée en ce que** la tige de support fait partie d'une cage de maintien (56), sur laquelle le corps intérieur est maintenu par rapport à des déplacements dans le sens de rotation du tambour extérieur et dans le sens contraire à celui-ci.

9. Machine de formation de gouttes selon la revendication 8, **caractérisée en ce que** la cage de maintien (56) comporte trois barres de support s'étendant parallèlement les unes par rapport aux autres.

10. Machine de formation de gouttes selon au moins l'une des revendications précédentes 6 à 9, **caractérisée en ce que** le stator est pourvu d'un élément chauffant de surface de segment (86), l'élément chauffant de surface de segment (86) étant disposé à l'intérieur du tambour extérieur, s'étendant parallèlement au tambour extérieur et, vu en coupe transversale, s'étendant sur un angle de plus de 180 degrés le long de la périphérie intérieure du tambour extérieur.

11. Machine de formation de gouttes selon au moins l'une des revendications précédentes, **caractérisée en ce que** le tambour extérieur est monté de manière à pouvoir tourner sur au moins une plaque de palier d'un bâti, une face frontale du tambour extérieur étant montée au moyen d'au moins trois paliers extérieurs disposés sur la plaque de palier.

12. Machine de formation de gouttes selon au moins l'une des revendications précédentes, **caractérisée en ce que** le tambour extérieur est relié de manière solidaire en rotation à une couronne dentée extérieure (40) disposée radialement à l'extérieur du tambour extérieur et concentriquement par rapport au tambour extérieur, et en un entraînement en rotation s'engageant sur la couronne dentée extérieure (40).

13. Dispositif avec une machine de formation de gouttes selon au moins l'une des revendications précédentes et une bande en circulation (20) destinée à déposer des gouttes de produit, **caractérisé en ce que** la machine de formation de gouttes est disposée de manière à pouvoir coulisser sur un bâti de machine et peut être coulissée d'une position au-dessus de la bande en circulation (20), qui est prévue pour déposer des gouttes de produit qui sont produites par la machine de formation de gouttes, dans une position de service éloignée de la bande en circulation (20).

14. Dispositif selon la revendication 13, **caractérisé en ce que** la machine de formation de gouttes est disposée sur un coulisseau de coulissement ou un chariot coulissant, qui est disposé de manière à pouvoir être coulissé sur des rails de guidage du bâti de machine.

15. Dispositif selon la revendication 13 ou 14, **caractérisé en ce que** le tambour extérieur est pourvu d'un couvercle de protection, qui s'étend jusqu'à un plan, dans lequel un brin supérieur de la bande en circulation est disposé au-dessous du tambour extérieur.
